Europäisches Patentamt

(19) European Patent Office    (11) Publication number: **0 191 429**

Office européen des brevets    **B1**

(12)    **EUROPEAN PATENT SPECIFICATION**

(45) Date of publication of patent specification: **27.12.90**    (51) Int. Cl.⁵: **G 21 C 7/26,** G 21 C 7/10,
G 21 C 7/00

(21) Application number: **86101593.1**

(22) Date of filing: **07.02.86**

(54) Spectral shift apparatus and method for a nuclear reactor fuel assembly.

(30) Priority: **12.02.85 US 701051**

(43) Date of publication of application:
**20.08.86 Bulletin 86/34**

(45) Publication of the grant of the patent:
**27.12.90 Bulletin 90/52**

(84) Designated Contracting States:
**BE DE FR GB IT SE**

(56) References cited:
**EP-A-0 054 237**
**FR-A-1 267 367**
**FR-A-2 498 800**
**FR-A-2 523 358**
**GB-A- 954 101**
**GB-A-2 160 698**

(73) Proprietor: **WESTINGHOUSE ELECTRIC
CORPORATION
Westinghouse Building Gateway Center
Pittsburgh Pennsylvania 15222 (US)**

(72) Inventor: **Lott, Randy George
1311 Laclair
Swissvale Pennsylvania 15218 (US)**
Inventor: **Baloh, Frank Joseph
RD No. 1
Dawson Pennsylvania 15428 (US)**

(74) Representative: **Patentanwälte Dipl.-Ing. R.
Holzer Dipl.-Ing. (FH) W. Gallo
Ludwigstrasse 26
D-8900 Augsburg (DE)**

Courier Press, Leamington Spa, England.

## Description

The present invention relates generally to nuclear reactors and, more particularly, to an apparatus and method for implementing a spectral shift in a nuclear fuel assembly increasing reactivity.

It is conventional practice to initially design an excessive amount of reactivity into the core of pressurized water reactors (PWR) in order to increase the life of the core. The excess of reactivity designed into the reactor core at the beginning of the core life must be properly controlled, of course, and one technique of doing so is to produce an initial spectral shift increasing the epithermal (low reactivity) part of the neutron spectrum at the expense of the thermal (high reactivity) part. This results in the production of fewer thermal neutrons and hence, in decreased fission. Then, as fission naturally decreases during extended reactor operation, a reverse shift from the epithermal part of the neutron spectrum back to the thermal part thereof is undertaken. This control technique involves primarily the use of displacer rods which are initially placed into the core to displace some of the moderator water therein and thereby decrease the core reactivity. Then, as reactivity is consumed and at some point during the core cycle, the moderator displacement associated with these rods is removed from the core so as to increase the amount of moderation and accordingly the level of reactivity in the core.

One approach considered for removing moderator displacement is through the use of a mechanism such as the one described in U.S. patent specification No. 4,432,934, for example, which is operated at a given time to withdraw the water displacer rods.

Another approach contemplated for removing the displacement is to use displacer rods provided at their ends with membranes which are ruptured at some point in time to allow the rods to be filled with water. Membrane rupture is initiated at an appropriate time by turning on a small heating element surrounding a specially indented end cap on the hollow displacer rod, thereby to heat and thus weaken the indented part of the end cap to a point enabling the external water pressure to rupture the end cap and thereby causing the rod to become filled with water.

A further approach employed in removing moderator displacement and described in U.S. patent specification No. 4,371,495 is to use, in the fuel assembly at least one rod filled with helium or another suitable gas, and to provide the top nozzle of the assembly with a spike disposed such that, as reactor operation proceeds and the gas-filled rod thermally expands to a length sufficient for its upper end plug to engage the spike, the latter will pierce the end plug and thus cause the rod to become filled with water.

Still another approach described in U.K. patent application No. 2,160,698 published on December 24, 1985, involves the use of a rotatable valve disposed in a central opening of a manifold which is in flow communication with a plurality of water displacer rods initially filled with burnable absorber gas which is slowly released by rotating the valve so as to progressively open ports in the displacer rods in a sequential pattern, thereby enabling the absorber gas slowly to escape while, at the same time admitting reactor coolant into the rods.

Although these earlier approaches generally achieve their objectives under the range of operating conditions for which they were designed, there still exists a need for a new and cost-effective manner of implementing spectral shift in an operating nuclear power plant. It is the principal object of the invention to satisfy such need.

The invention from one aspect thereof, accordingly resides in a spectral shift method for controlling nuclear reactivity in a reactor core containing fuel assemblies with fuel rods arrayed therein, and a primary moderator/coolant for moderating neutron flux and cooling the core, characterized by the steps of: (a) initially selecting a given reactivity level by introducing among said fuel rods a plurality of moderator/coolant displacer rods containing a quantity of water equivalent to a minor fraction of the displacer rod volume, and sealed in a manner resulting in sealing failure and consequential flooding of the displacer rods with moderator/coolant when the pressure differential between the primary moderator/coolant in the core and the interior of the sealed displacer rods increases above a predetermined value; (b) increasing the power of the reactor core to a normal operating level thereof, thereby causing the internal pressure in the sealed displacer rods to rise so as to reduce said pressure differential to a level below said predetermined value; and (c) subsequently effecting a spectral shift by rendering the reactor core subcritical by an amount of reactivity substantially equivalent to the maximum reactivity added through flooding of the displacer rods, and elevating the pressure differential between the primary moderator/coolant in the core and the interior of the displacer rods to a level above said predetermined value, thereby to effect sealing failure and consequential flooding of the displacer rods.

The step of effecting spectral shift preferably includes reducing the temperature of the primary moderator/coolant, while maintaining normal operating pressure thereof, sufficiently to reduce the internal pressure of the displacer rods and thereby increase the said pressure differential to the level above said predetermined value. A relatively simple way of reducing the temperature of the primary moderator/coolant is to lower steam pressure in the secondary flow path associated with the reactor core.

From another aspect thereof, the invention resides in apparatus for performing the spectral shift method set forth above, said apparatus comprising said sealed displacer rods containing said quantity of water, each of the displacer rods having both ends thereof sealed and having one end thereof sealed with a sealing means adapted to become ineffective and thereby to admit moderator/coolant from the reactor core into the displacer rod when said pressure differential reaches said level above said predetermined value.

In the preferred embodiment of the invention to be fully described later herein, the apparatus for performing the spectral shift method comprises said displacer rods containing said quantity of water, a support structure having the displacer rods connected thereto and supported therefrom, means defining fluid flow paths for conducting moderator/coolant from the reactor core into the displacer rods, and sealing means disposed so as to seal said fluid flow paths against moderator/coolant flow therethrough, said sealing means being adapted to become ineffective and thereby to permit said moderator/coolant flow when said pressure differential reaches said level above said predetermined value.

It will be appreciated that even though removal of the moderator displacement through flooding of the displacer rods adjusts the reactor core to a substantially higher reactivity level, such adjustment occurs while the reactor is subcritical, i.e. in a shutdown condition, and, consequently, requires no special "high risk" safety features to be made available for use thereof during a reverse spectral shift. Moreover, effecting a spectral shift in accordance with the invention requires no special wiring or plumbing such as would entail extensive modifications to be made to the reactor internals and would refuelling time. Instead, the invention utilizes a reactor-system operational variable (i.e., temperature, pressure, flow, etc.) to effect the removal of moderator displacement, and such removal is initiated upon demand by the operator rather than as a result of inaccurately predictable phenomena, such as fissile material burn up or material swelling or creep. The equipment can be fabricated economically and is easily refurbished for continued use. Summing up, as compared to previous approaches to implementation of spectral shift, the equipment disclosed herein is less complicated, requires no extensive modifications to be made to existing hardware, and is not prone to inappropriate actuation.

A preferred embodiment of the invention will now be described, by way of example only, with reference to the accompanying drawings, in which:

Fig. 1 is an elevational view of a conventional fuel assembly together with the spectral shift apparatus embodying the invention and a refurbishing apparatus according to an invention claimed in Applicant's copending patent application EP—A—191430, the fuel assembly being illustrated in a vertically foreshortened form and with a portion of its top nozzle broken away to more clearly show the spectral shift and refurbishing apparatus;

Fig. 2 is an enlarged, partially sectioned, elevational view of the spectral shift and refurbishing apparatus as removed from the fuel assembly;

Fig. 3 is a sectional view of a portion of the spectral shift apparatus as taken along line 3—3 of Fig. 2;

Fig. 4 is an enlarged top plan view of a baffle screen such as employed in the spectral shift apparatus;

Fig. 5 is an enlarged top plan view of a rupturable disk such as employed in the spectral shift apparatus;

Fig. 6 is a sectional view of the disk as taken along line 6—6 of Fig. 5 and illustrating the disk before rupture thereof;

Fig. 7 is a sectional view of the disk similar to Fig. 6 but showing the disk after rupture;

Fig. 8 is an enlarged fragmentary, elevational view, partially in section, of the refurbishing apparatus as removed from the fuel assembly of Fig. 1;

Fig. 9 is an enlarged fragmentary, elevational view, partially in section, of an alternative form of the spectral shift apparatus; and

Fig. 10 is a simplified representation of a whole nuclear reactor system, illustrating particularly those parts thereof to which operational transient adjustments are made in order to activate the spectral shift apparatus for the purpose of increasing the reactivity in the reactor core.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

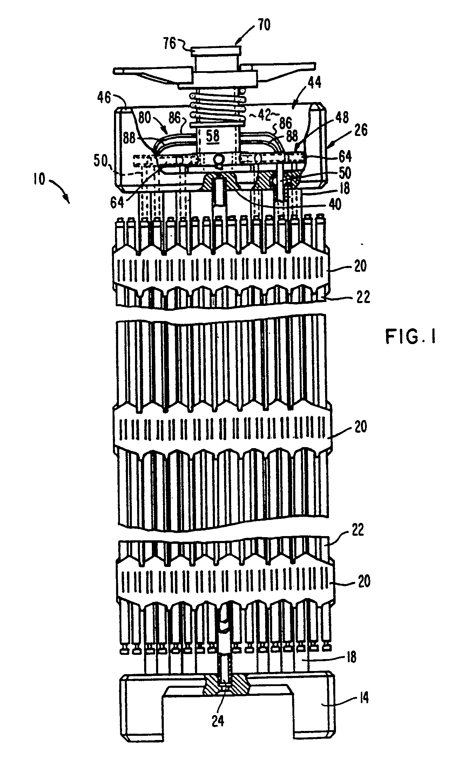

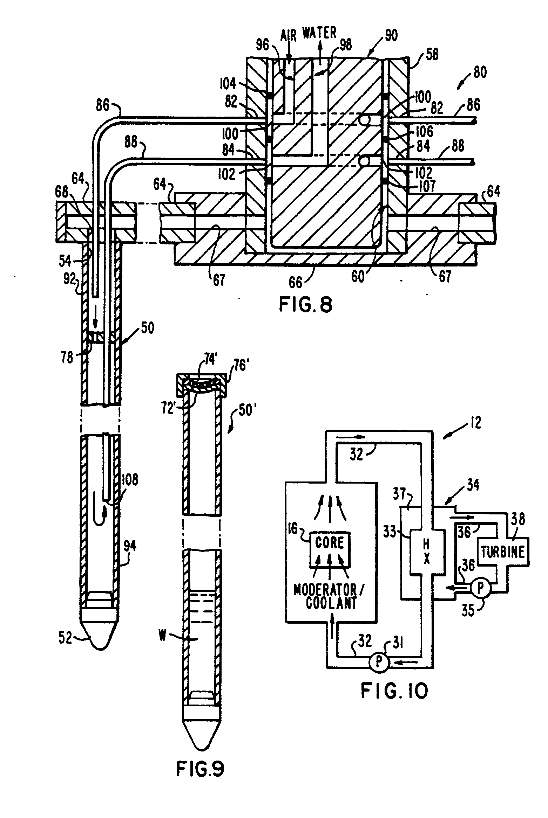

Referring now to the drawings, and particularly to Fig. 1, the fuel assembly illustrated therein and generally designated with reference numeral 10 is of the type used in pressurized water reactors (PWR), such as the one diagrammatically illustrated in simplified form in Fig. 10 and designated with numeral 12. The fuel assembly 10 comprises a lower end structure or bottom nozzle 14 for supporting the assembly 10 on the lower core plate (not shown) in the core 16 of the PWR 12, guide tubes or thimbles 18 extending longitudinally upward from the bottom nozzle 14, transverse grids 20 axially spaced along the guide thimbles 18, an organized array of fuel rods 22 transversely spaced and supported by the grids 20, an instrumentation tube 24 located in the center of the fuel assembly, and an upper end structure or top nozzle 26 attached to the upper ends of the guide thimbles 18. The fuel assembly 10 forms an integral unit capable of being conventionally handled without damage to its assembly parts.

As well known in the art, each of the fuel rods 22 contains nuclear fuel pellets (not shown) composed of fissile material, and has its opposite ends sealed. During reactor operation, a primary liquid moderator/coolant, such as water, held under a sufficiently high pressure (e.g. at 155 bar (153 atm)) to keep it in liquid form, is pumped through the fuel assemblies 10 of the core 16 in order to extract heat generated therein. As shown in Fig. 10, the primary coolant is circulated by a primary pump 31 through a closed primary path 32 which leads through a first chamber 33 of a heat exchanger 34 where the extracted heat is given up to a secondary flow of water circulated by a secondary pump 35 through a closed secondary path 36 which leads through a second chamber 37 of the heat exchanger 34 where the water in the secondary path is turned into steam used to drive a turbine 38 for generating electricity.

In the operation of the PWR 12, it is desirable to prolong the life of the reactor core 16 for as long as feasible so as to better utilize the uranium fuel and thereby reduce fuel costs. In order to do so, it is common practice to initially design into the reactor core 16 an excess of reactivity and, at the same time, provide means for reducing the use of excess reactivity at the early stage of the core operating cycle and for increasing it later in the operating cycle. A number of control rods (not shown) reciprocally movable in some of the guide thimbles 18 can be employed to partially effectuate excess reactivity control but full control usually is achieved, as mentioned earlier herein, by additional means such as through spectral shift involving the displacement of moderator water to reduce excess reactivity at an early stage of the core operating cycle, and the subsequent removal of the moderator displacement to increase the reactivity. The apparatus according to the present invention and the one embodying the invention claimed in Applicant's copending application mentioned above are designed to permit spectral shift to be implemented in existing reactors and on a reusable basis. Both of the above-mentioned apparatus are associated, when in use, with the top nozzle of the fuel assembly and with some of the guide thimbles intended to have no control rods inserted therein. Therefore, it is briefly noted that the top nozzle 26 comprises a transversely extending adapter plate 40 and upright sidewalls 42 connected to the plate 40 at its periphery and extending therefrom upwards so as to define an enclosure or housing 44. Connected to the top of the sidewalls 42 is an annular flange 46 adapted to have clamped thereto leaf springs (not shown) which cooperate with the upper core plate (not shown) of the reactor core 16 to prevent hydraulic lifting of the fuel assembly 10 while allowing for changes in fuel assembly length, as well known in the art.

Spectral Shift Apparatus and Method

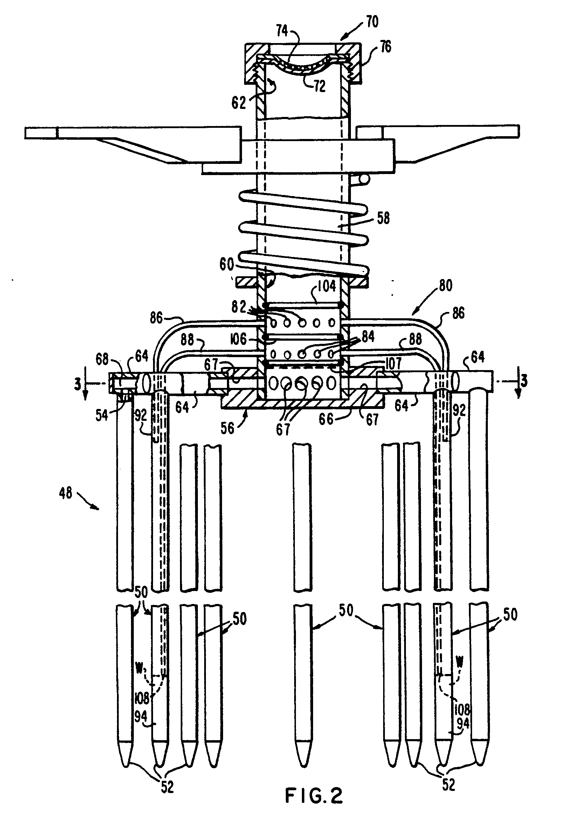

As shown in Fig. 1, the spectral shift apparatus embodying the invention and generally designated with numeral 48 is disposed within the housing 44 of the top nozzle 26 and extends into some of the guide thimbles 18. Referring also to Fig. 2, the spectral shift apparatus 48 includes a plurality of water displacer rods 50 adapted to be inserted into respective ones of the guide thimbles 18 of the fuel assembly 10 for the purpose of displacing a predetermined volume of the liquid neutron moderating coolant present in the assembly 10 and thereby reducing the hydrogen/uranium ratio, hence the reactivity level of the reactor core 16. Each of the displacer rods 50 consists of an elongate tubular body 51 which is sealed at its lower end with an end plug 52, has a flow opening 54 defined at its upper end, and contains a quantity of water W equivalent to a predetermined minor fraction, e.g. 15%, of the total volume of the rod 50.

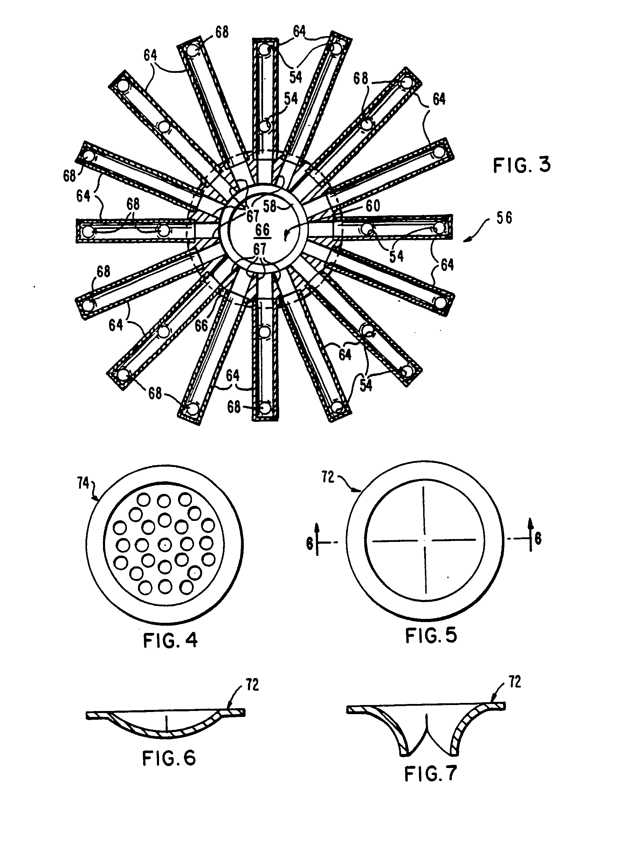

The spectral shift apparatus 48 also includes a manifold, generally designed with numeral 56, which interconnects the displacer rods 50 and is in fluid flow communication therewith. The manifold 56 is located atop the fuel assembly 10, being disposed within the top nozzle 26 and resting on its adapter plate 40 (see Fig. 1). Referring in particular to Figs. 2 and 3, the manifold 56 comprises a central inlet in the form of a tubular and preferably cylindrical member 58 which defines a central plenum 60 axially therethrough and has at its upper end a central inlet opening 62 which is in fluid flow communication with the plenum. The manifold 56 includes also a plurality of hollow tubular vanes 64 which are mounted on a hub 66 attached to the cylindrical member 58 and closing it at the lower end thereof. The vanes 64 which extend radially outward from the member 58 are in fluid flow communication with the central plenum 60 through radial flow channels 67 formed in the hub 66, and they are provided with openings 68 which form outlets of the manifold 56. The displacer rods 50 are connected, at their upper ends, to the various tubular vanes 64 such that the flow opening 54 of each displacer rod is in fluid flow communication with an outlet 68 of the manifold. The manifold 56 and the tubular vanes 64 serve as a support structure for the displacer rods.

In its preferred form, the spectral shift apparatus 48 further includes sealing means, generally designated 70, connected to the cylindrical member 58 of the manifold 56 and sealing the inlet opening 62 therein. The sealing means 70 comprises a rupturable disk 72, a baffle screen 74, and an annular cap 76, commercially available per se as standard off-the-shelf items. The disk 72 is selected to rupture at a given pressure differential there across. For instance, in order to avoid rupturing due to pressure variations caused by application of design duty cycle transients which at a maximum are not expected to be substantially above 100 bar (100 atm), the disk 72 could be designed to fail or rupture only if the pressure differential exceeds 120 bar (120 atm). As seen from Figs. 2 and 6, the disk 72 is dished and is so mounted on the tubular member 58 that its convex side faces inward and its concave side faces outwards. Preferably, the dished portion of the disk 72 is prescored to promote rupture in a particular direction, namely, inwardly of the central plenum 60 within the member 58, as illustrated in Fig. 7. In order to additionally ensure that the disk 72 will rupture inwards of the tubular member 58, the baffle screen 74 (see also Fig. 4) is placed over its concave or high-pressure side. The disk 72 and the screen 74 are sealingly but removably and replaceably mounted on the upper end of the cylindrical member 58 by means of the annular cap 76 which is internally threaded and removably connected to externally threaded upper end portion of the member 58 so as to permit a ruptured disk 72 to be eventually removed and replaced with a new one.

An alternative to the arrangement described above and employing a plenum with a single sealing disk 72 common to all of the displacer rods 50 would be one in which each displacer rod is sealed separately, such as shown in Fig. 9 illustrating a displacer rod 50' having its own sealing means 70' comprising a rupturable disk 72', baffle screen 74', and annular cap 76' each performing the same functions as the corresponding parts of the sealing means 70 described above. This arrangement has the advantage that if one of the seals in the apparatus fails prematurely, the effect of its failure will be less noticeable from a power peaking and reactivity insertion viewpoint than the effect of failure of a common seal resulting in flooding of all displacer rods. However, the common sealed plenum approach is appealing because of the lesser number of parts and greater simplicity with regard to refurbishment. Practitioners no doubt will base their ultimate choice between these two different approaches upon considerations regarding trade-offs of seal reliability, power peaking, and other factors. Regardless of the approach chosen (i.e., single seal or multiple seals), the seal is designed to rupture on demand and to provide the flooding of the displacer rods 50 when desired.

The method of effecting spectral shift in accordance with the invention and utilizing the spectral shift apparatus 48 disclosed herein will now be described with particular reference to Fig. 10, it being noted that a separate spectral shift apparatus is employed with each of a desired number of fuel assemblies 10 in the core 16. Initially, and with each displacer rod 50 partially filled up to a minor fraction, such as 15%, of its volume with water, and with all of the sealing means 70 in place, the various spectral shift apparatus 48 are positioned upon the respective fuel assemblies 10 such that their displacer rods 50 extend into guide thimbles 18. When thus positioned, the displacer rods 50 are disposed in the closed primary flow path 32 of the primary moderator/coolant and consequently they displace a predetermined volume of the primary moderator/coolant according to their size, thereby causing the spectrum of nuclear reactivity produced by the fuel rods 22 in the core 16 to be shifted from an excessively high, initial level down to a lower level.

Thereafter, the power of the reactor core 16 is elevated to its normal operating level, ordinarily through manipulation of the control rods (not shown), and the primary pump 31 is operated to increase the pressure of the primary moderator/coolant in the flow path 32 likewise to a normal operating level. At this level of reactor operation, the pressure of the water within the displacer rods 50 is also elevated, and the pressure differential across the rupturable disk 72, based upon the pressure of the water within the sealed displacer rods 50 relative to the pressure of the primary moderator/coolant, will typically be 78 atm or less. As mentioned earlier herein, the disk 72 is designed to withstand pressure variations due to operating transients up to approximately 120 bar (120 atm).

When rupture of the disk 72 and thus flooding of the rods 50 for the purpose of effecting a reverse spectral shift are desired, the following unique operational transient is imposed while maintaining the pressure of the primary moderator/coolant at its normal operating level of approximately 150 bar (150 atm). The reactor power is decreased to about two percent of the normal operating level, with the turbine 38 being taken off-line and the reactor core 16 being made subcritical by an amount of reactivity equivalent to the maximum reactivity that could be added by rupture of the disk 72 and flooding of the rods 50. The primary coolant temperature is reduced to 190—205°C by dropping steam pressure. At about 205°C, the saturation pressure inside each of the rods 50 is approximately 17 bar (17 atm) and the differential pressure across the rupturable disk 72 is approximately 135 bar (135 atm), i.e. above the predetermined differential of 120 bar (120 atm) at which the disk is designed to rupture. Thus, the disk 72 will rupture and the displacer rods 50 consequently will become flooded, means in the form of a flow restrictor 78 (see Fig. 8) preferably being provided in the upper portion of the tubular body 51 of each displacer rod 50 to restrict the rate of moderator/coolant flow into the body 51. Flooding of the displacer rods 50 with moderating coolant produces a reverse spectral shift which returns the reactivity to the desired higher level. After this reverse spectral shift, the reactor core 16 is returned to normal power.

To obtain maximum "spectral shift" benefit, as many fuel assemblies as possible should be equipped with the apparatus 48, such as, for example, all fuel assemblies having no control rod assemblies associated therewith. In order to minimize or eliminate extension of the refuelling down-time, refurbishment of the apparatus 48, consisting in draining the rods 50 and replacing the ruptured disks 72, preferably should be done off-line. For instance, after installing a refurbished spectral shift apparatus 48 in the reactor core 16, the removed spectral shift apparatus can be taken to a fuel storage area and readied for installation during a subsequent refuelling stop. Temporary storage of the apparatuses can be made in the stored fuel. An apparatus lifetime of 3—5 cycles appears to be feasible.

## Claims

1. A spectral shift method for controlling nuclear reactivity in a reactor core containing fuel assemblies with fuel rods arrayed therein, and a primary moderator/coolant for moderating neutron flux and cooling the core, characterized by the steps of:

(a) initially selecting a given reactivity level by introducing among said fuel rods a plurality of moderator/coolant displacer rods containing a quantity of water equivalent to a minor fraction of the displacer rod volume, and sealed in a manner resulting in sealing failure and consequential flooding of the displacer rods with moderator/coolant when the pressure differential between the primary moderator/coolant in the core and the interior of the sealed displacer rods increases above a predetermined value;

(b) increasing the power of the reactor core to a normal operating level thereof, thereby causing the internal pressure in the sealed displacer rods to rise so as to reduce said pressure differential to a level below said predetermined value; and

(c) subsequently effecting a spectral shift by rendering the reactor core subcritical by an amount of reactivity substantially equivalent to the maximum reactivity added through flooding of the displacer rods, and elevating the pressure differential between the primary moderator/coolant in the core and the interior of the displacer rods to a level above said predetermined value, thereby to effect sealing failure and consequential flooding of the displacer rods.

2. A spectral shift method according to claim 1, characterized in that the step of effecting the spectral shift includes lowering the power of said reactor core to a small fraction of normal operating power thereof.

3. A spectral shift method according to claim 2, characterized in that said small fraction amounts substantially to 2% of normal operating power.

4. A spectral shift method according to claim 1, 2 or 3, characterized in that the step of effecting spectral shift includes reducing the temperature of the primary moderator/coolant, while maintaining normal operating pressure thereof, sufficiently to reduce the internal pressure of the displacer rods and thereby to increase said pressure differential to the level above said predetermined value.

5. A spectral shift method according to claim 4, characterized in that the temperature of the primary moderator/coolant is reduced by lowering steam pressure in a secondary flow path associated with the reactor core.

6. Apparatus for performing the spectral shift method according to any one of the claims 1 to 5, characterized by the combination comprising said displacer rods (50 or 50′) containing said quantity of water, a support structure (56, 58, 64) having the displacer rods connected thereto and supported therefrom, means (54, 60, 62, 64, 67, 68) defining fluid flow paths for conducting moderator/coolant from the reactor core into the displacer rods, and sealing means (70 or 70′) disposed so as to seal said fluid flow paths against moderator/coolant flow therethrough, said sealing means (70 or 70′) being adapted to become ineffective and thereby to permit said moderator/coolant flow when said pressure differential reaches said level above said predetermined value.

7. Apparatus according to claim 6, characterized in that each of the displacer rods (50′) has one of said sealing means (70′) individually associated therewith.

8. Apparatus according to claim 6, characterized in that said sealing means (70) is a single sealing means common to all of the displacer rods (50).

9. Apparatus according to claim 8, characterized in that said support structure (56, 58, 64) comprises a manifold (56) having an inlet (58) for admitting moderator/coolant from the reactor core, and a plurality of tubular vanes (64) extending from the manifold and disposed in fluid flow communication therewith, said tubular vanes having the respective displacer rods (50) connected thereto and in fluid flow communication therewith, and said sealing means (70) being disposed in the inlet (58) of said manifold (56).

10. Apparatus according to any one of the claims 6 to 9, characterized in that said quantity of water in the sealed displacer rods amounts substantially to 15% of the displacer rod volume.

11. Apparatus according to any one of the claims 6 to 10, characterized in that said or each sealing means (70 or 70′) comprises a replaceable rupture disk (72 or 72′) designed to rupture at a pressure differential thereacross corresponding to said level above said predetermined value.

12. Apparatus according to claim 11, characterized in that said rupture disk (72 or 72′) is prescored to facilitate rupture thereof toward the low-pressure side.

13. Apparatus according to claim 11 or 12, characterized in that said rupture disk (72 or 72′) has a dished portion which is concave on the high-pressure and convex on the low-pressure side thereof.

14. Apparatus according to claim 11, 12 or 13, characterized in that said or each sealing means (70 or 70′) includes a baffle screen (74 or 74′) which overlies the rupture disk (72 or 72′) on the high-pressure side thereof.

15. Apparatus according to claim 11, 12, 13 or 14, characterized in that said sealing means (70 or 70′) includes a coupling member (76 or 76′) for removably fastening the sealing means in its sealing position.

16. Apparatus according to any one of the claims 6 to 15, characterized in that each displacer rod (50 or 50′) has associated therewith a flow restrictor (78) for limiting the rate of moderator/coolant flow into the displacer rod.

## Patentansprüche

1. Verfahren zur Steuerung der Kernreaktivität in einem Reaktorkern durch Spektralverschiebung, wobei der Reaktorkern Brennstoffanordnungen mit darin regelmäßig angeordneten Brennstäben und ein primären Moderator/Kühlmittel zur Moderierung des Neutronenflusses und zur Kühlung des Kerns aufweist, gekennzeichnet durch folgende Verfahrensschritte:

a) anfängliches Festlegen eines gegebenen Reaktivitätspegels durch Einführen einer Mehrzahl von zu einem kleinen Bruchteil mit Wasser gefüllten Moderator/Kühlmittel-Verdrängerstäben zwischen die Brennstäbe, wobei die Verdrängerstäbe derart verschlossen sind, daß, wenn die Druckdifferenz zwischen dem primären Moderator/Kühlmittel im Reaktorkern und dem Inneren des verschlossenen Verdrängerstabs über einen vorbestimmten Wert hinaus ansteigt, der Verschluß versagt und die Verdrängerstäbe dementsprechend mit Moderator/Kühlmittel geflutet werden;

b) Erhöhen der Reaktorkernleistung auf einen normalen Betriebswert, wobei der Innendruck in den verschlossenen Verdrängerstäben ansteigt, so daß die Druckdifferenz auf einen Wert unterhalb des vorbestimmten Wertes reduziert wird; und

c) nachfolgendes Bewirken einer Spektralverschiebung durch Wiederherstellung des unterkritischen Zustands im Reaktorkern durch einen Reaktivitätswert, welcher etwa dem maximalen Reaktivitätswert entspricht, der durch eine Flutung der Verdrängerstäbe hinzukommt, und durch eine Anhebung der Druckdifferenz zwischen dem primären Moderator/Kühlmittel im Reaktorkern und im Inneren der Verdrängerstäbe auf einen Wert oberhalb des vorbestimmten Wertes, wobei ein Versagen des Verschlusses und dementsprechendes Fluten der Verdrängerstäbe erreicht wird.

2. Verfahren nach Anspruch 1, dadurch gekennzeichnet, daß der Verfahrensschritt des Bewirkens der Spektralverschiebung eine Herabsenkung der Reaktorkernleistung auf einen kleinen Bruchteil der normalen Betriebsleistung beinhaltet.

3. Verfahren nach Anspruch 2. dadurch gekennzeichnet, daß der kleine Bruchteil etwa 2% der normalen Betriebsleistung beträgt.

4. Verfahren nach Anspruch 1, 2 oder 3, dadurch gekennzeichnet, daß der Verfahrensschritt des Bewirkens der Spektralverschiebung eine derartige Temperaturabsenkung des primären Moderators/Kühlmittels bei Aufrechterhaltung des normalen Betriebsdrucks beinhaltet, daß der Innendruck der Verdrängerstäbe genügend reduziert und dabei die Druckdifferenz auf einen Wert oberhalb des vorbestimmten Werts angehoben wird.

5. Verfahren nach Anspruch 4, dadurch gekennzeichnet, daß die Temperaturabsenkung des primären Moderators/Kühlmittels durch Senkung des Dampfdruckes in einem dem Reaktorkern zugeordneten Sekundärsystem erreicht wird.

6. Vorrichtung zur Ausführung des Spektralverschiebungs-Verfahrens nach einem der Ansprüche 1 bis 5, gekennzeichnet durch die Kombination der Merkmale, daß, die Verdrängerstäbe (50 oder 50') die genannte Wassermenge enthalten, eine Tragkonstruktion (56, 58. 64) vorgesehen ist, mit welcher die Verdrängerstäbe verbunden und von welcher sie getragen werden, weiter Mittel (54, 60, 62, 64, 67, 68) vorgesehen sind, welche Strömungskanäle für Moderator/Kühlmittel vom Reaktorkern in die Verdrängerstäbe bilden, und Verschlußvorrichtung (70 oder 70') zum Verschließen der Strömungskanäle zur Verhinderung einer Moderator/Kühlmittelströmung durch die Strömungskanäle vorgesehen sind, wobei die Verschlußvorrichtungen (70 oder 70') derart ausgelegt sind, daß sie, wenn die Druckdifferenz einen Betrag oberhalb des vorbestimmten Wertes erreicht, unwirksam werden und dadurch die Moderator/Kühlmittelströmung zulassen.

7. Vorrichtung nach Anspruch 6, dadurch gekennzeichnet, daß jedem der Verdrängerstäbe (50') eine der Verschlußvorrichtungen (70') individuell zugeordnet ist.

8. Vorrichtung nach Anspruch 6, dadurch gekennzeichnet, daß eine einzige Verschlußvorrichtung (70) allen Verdrängerstäben (50) gemeinsam zugeordnet ist.

9. Vorrichtung nach Anspruch 8, dadurch gekennzeichnet, daß die Tragkonstruktion (56, 58, 64) einen Verteiler (56) mit einem Einlaß (58) zur Einströmung von Moderator/Kühlmittel vom Reaktorkern her und mit einer Mehrzahl von sich vom Verteiler aus erstreckenden und mit diesem in Strömungsverbindung stehenden rohrartigen Leitkanälen (64) aufweist, wobei die rohrartigen Leitkanäle mit den jeweiligen Verdrängerstäben (50) verbunden sind und mit diesen in Strömungsverbindung stehen, und wobei die Verschlußvorrichtung (70) im Einlaß (58) des Verteilers (56) angeordnet sind.

10. Vorrichtung nach einem der Ansprüche 6 bis 9. dadurch gekennzeichnet, daß die Wassermenge in den verschlossenen Verdrängerstäben etwa 15% des Verdrängerstabvolumens beträgt.

11. Vorrichtung nach einem der Ansprüche 6 bis 10, dadurch gekennzeichnet, daß jede der Verschlußvorrichtung (70 oder 70') eine austauschbare Sollbruchscheibe (72 oder 72') aufweist, welche derart ausgelegt ist, daß sie bei einer einem Betrag oberhalb des vorbestimmten Wertes entsprechenden an ihr anliegenden Druckdifferenz bricht.

12. Vorrichtung nach Anspruch 11, dadurch gekennzeichnet, daß die Sollbruchscheibe (72 oder 72') vorgekerbt ist, um das Brechen in Richtung der Niederdruckseite zu erreichen.

13. Vorrichtung nach Anspruch 11 oder 12, dadurch gekennzeichnet, daß die Sollbruchscheibe (72 oder 72') einen einwärts gekrümmten Abschnitt aufweist, welcher bezüglich der Hochdruckseite konkav und bezüglich der Niederdruckseite konvex ist.

14. Vorrichtung nach einem der Ansprüche 11, 12 oder 13, dadurch gekennzeichnet, daß jede der Verschlußvorrichtung (70 oder 70') eine Prallplatte (70 oder 74') aufweist, welche hochdruckseitig an der Sollbruchscheibe (72 oder 72') anliegt.

15. Vorrichtung nach einem der Ansprüche 11, 12, 13 oder 14, dadurch gekennzeichnet, daß die Verschlußvorrichtungen (70 oder 70') je ein Verbindungsglied (76 oder 76') zur lösbaren Befestigung der Verschlußvorrichtung in ihrer Verschlußstellung aufweisen.

16. Vorrichtung nach einem der Ansprüche 6 bis 15, dadurch gekennzeichnet, daß jedem Verdrängerstab (50 oder 50') zur Begrenzung der Moderator/Kühlmittel-Strömungsgeschwindigkeit in den Verdrängerstab ein Flußbegrenzer (78) zugeordnet ist.

## Revendications

1. Procédé de dérive spectrale pour régler la réactivité nucléaire d'un corps de réacteur contenant des assemblages combustibles dans lesquels des barres de combustible sont disposées en faisceau, et un liquide réfrigérant-modérateur primaire afin de modérer le flux neutronique et refroidir le coeur, caractérisé en ce qu'il comprend les stades de:

a) sélection initiale d'un niveau donné de réactivité par introduction, dans les barres de combustible, d'une pluralité de barres de déplacement de liquide réfrigérant-modérateur contenant une quantité d'eau équivalant à une fraction mineure du volume de la barre de déplacement, et scellées de manière à provoquer une rupture d'étanchéité et en conséquence le noyage des barres de déplacement par le liquide réfrigérant-modérateur lorsque la différence de pression entre le liquide réfrigérant-modérateur primaire dans le coeur et à l'intérieur des barres scellées de déplacement dépasse une valeur prédéterminée;

b) augmentation de la puissance du coeur du réacteur jusqu'à son niveau normal de fonctionnement, provoquant de ce fait l'augmentation de la pression intérieure des barres scellées de déplacement de manière à réduire cette différence de pression à un niveau inférieur à cette valeur prédéterminée; et

c) réalisation subséquente d'une dérive spectrale obtenue en rendant le coeur du réacteur sous-critique d'une quantité de réactivité sensiblement équivalente à la réactivité maximale ajoutée par le noyage des barres de déplacement, et élévation de la différence de pression entre le liquide réfrigérant-modérateur primaire dans le coeur et à l'intérieur des barres de déplacement à un niveau supérieur à la valeur prédéterminée, de manière à provoquer une rupture d'étanchéité et en conséquence un noyage des barres de déplacement.

2. Procédé de dérive spectrale suivant la revendication 1, caractérisé en ce que le stade de réalisation de la dérive spectrale comprend l'abaissement de la puissance du coeur du réacteur à une faible fraction de sa puissance normale de fonctionnement.

3. Procédé de dérive spectrale suivant la revendication 2, caractérisé en ce que cette faible fraction s'élève sensiblement à 2% de la puissance normale de fonctionnement.

4. Procédé de dérive spectrale suivant la revendication 1, 2 ou 3, caractérisé en ce que le stade de réalisation de la dérive spectrale comprend la réduction de la température du liquide réfrigérant-modérateur primaire, tout en maintenant sa pression normale de fonctionnement, suffisamment pour réduire la pression intérieure des barres de déplacement et, de ce fait, porter la différence de pression à un niveau supérieur à la valeur prédéterminée.

5. Procédé de dérive spectrale suivant la revendication 4, caractérisé en ce que la température du liquide réfrigérant-modérateur primaire est réduite par l'abaissement de la pression de la vapeur dans le circuit de circulation secondaire associé au coeur du réacteur.

6. Appareil pour mettre en oeuvre le procédé de dérive spectrale suivant l'une quelconque des revendications 1 à 5, caractérisé par la combinaison comprenant les barres (50 ou 50') de déplacement contenant la quantité d'eau, une structure (56, 58, 64) de support à laquelle sont reliées les barres de déplacement et par laquelle elles sont supportées, des moyens (54, 60, 62, 64, 67, 68) formant conduits d'écoulement de fluide pour amener le liquide réfrigérant-modérateur du coeur du réacteur dans les barres de déplacement, et un, moyen (70 ou 70') de scellement placé pour sceller ces conduits d'écoulement de fluide afin d'empêcher tout écoulement du liquide réfrigérant-modérateur dans ces conduits, ce moyen de scellement (70 ou 70') étant prévu pour devenir inefficace et donc permettre l'écoulement du liquide réfrigérant-modérateur lorsque la différence de pression atteint le niveau supérieur à la valeur prédéterminée.

7. Appareil suivant la revendication 6, caractérisé en ce qu'à chacune des barres (50') de déplacement est individuellement et associé l'un de ces moyens (70) de scellement.

8. Appareil suivant la revendication 6, caractérisé en ce que le moyen (70) de scellement est un moyen unique de scellement commun à toutes les barres (50) de déplacement.

9. Appareil suivant la revendication 8, caractérisé en ce que cette structure (56, 58, 64) de support comprend un collecteur (56) dont une entrée (58) admet le liquide réfrigérant-modérateur venant du coeur du réacteur, et une pluralité de bras tubulaires creux (64) qui partent du collecteur et qui sont reliés hydrauliquement à celui-ci, ces bras tubulaires creux étant reliés aux barres respectives (50) de déplacement pour communiquer hydrauliquement avec elles, et le moyen (70) de scellement étant placé dans l'entrée (58) du collecteur (56).

10. Appareil suivant l'une quelconque des revendications 6 à 9, caractérisé en ce que cette quantité d'eau dans les barres scellées de déplacement s'élève sensiblement à 15% du volume de la barre de déplacement.

11. Appareil suivant l'une quelconque des revendications 6 à 10, caractérisé en ce que ce ou chacun de ces moyens (70 ou 70') de scellement comprend un disque (72 ou 72') de rupture remplaçable, conçu pour ne se rompre que sous une différence de pression appliquée de part et d'autre et correspondant à ce niveau supérieur à la valeur prédéterminée.

12. Appareil suivant la revendication 11, caractérisé en ce que ce disque (72 ou 72') de rupture est préentaillé pour que sa rupture soit facilitée vers le côté basse pression.

13. Appareil suivant la revendication 11 ou 12, caractérisé en ce que ce disque (72 ou 72') comporte une partie bombée dont le côté haute pression est concave tandis que le côté basse pression est convexe.

14. Appareil suivant la revendication 11, 12 ou 13, caractérisé en ce que ce ou chacun de ces moyens (70 ou 70') de scellement comprend une grille déflectrice (74 ou 74') qui recouvre le côté haute pression du disque (72 ou 72') de rupture.

15. Appareil suivant la revendication 11, 12, 13 ou 14, caractérisé en ce que le moyen (70 ou 70') de scellement comprend un élément (76 ou 76') de montage pour fixer de manière amovible le moyen de scellement dans sa position de scellement.

16. Appareil suivant l'une quelconque des revendications 6 à 15, caractérisé en ce qu'à chaque barre (50 ou 50') de déplacement est associé un limiteur (78) de débit prévu pour limiter le débit du liquide réfrigérant-modérateur entrant dans la barre de déplacement.

FIG. 1

FIG.2

2

FIG. 3

FIG. 4

FIG. 5

FIG. 6

FIG. 7

**FIG.8**

**FIG.9**

**FIG.10**